## Europäisches Patentamt

## European Patent Office

## Office européen des brevets

(11) Veröffentlichungsnummer: **0 166 284**
**B1**

(12) **EUROPÄISCHE PATENTSCHRIFT**

(45) Veröffentlichungstag der Patentschrift: **22.11.90**

(21) Anmeldenummer: **85107056.5**

(22) Anmeldetag: **07.06.85**

(51) Int. Cl.⁵: **A 23 L 1/24,** A 23 L 1/39,
A 23 L 1/48, A 23 L 1/32,
A 23 C 13/14

(54) **Saucenverbesserer in Tuben.**

(30) Priorität: **27.06.84 DE 3423699**

(43) Veröffentlichungstag der Anmeldung:
**02.01.86 Patentblatt 86/01**

(45) Bekanntmachung des Hinweises auf die
Patenterteilung:
**22.11.90 Patentblatt 90/47**

(84) Benannte Vertragsstaaten:
**AT BE CH DE FR GB IT LI NL SE**

(56) Entgegenhaltungen:
**EP-A-0 049 927       FR-A-2 464 033
FR-A-2 291 707       GB-A- 546 593
FR-A-2 349 284       US-A-2 115 505**

**JOURNAL OF THE SCIENCE OF FOOD &
AGRICULTURE, Band 32, Nr. 5, Mai 1981, Seiten
451-458, Oxford, GB; C.E. DUTILH et al.:
"Improvement of product attributes of
mayonnaise by enzymic hydrolysis of egg yolk
with phospholipase A2"**

(73) Patentinhaber: **SOCIETE DES PRODUITS
NESTLE S.A.
Case postale 353
CH-1800 Vevey (CH)**

(72) Erfinder: **Postner, Hermann
Brenzstrasse 24
D-7140 Ludwigsburg (DE)**

Courier Press, Leamington Spa, England.

EP 0 166 284 B1

**Beschreibung**

Zum Andicken oder Legieren von Suppen, Saucen, Gemüsebrühen u.ä. werden häufig Eigelb, Stärken und Mehle, Sahne oder "Crème fraîhe", Milch und Geschmacksverbesserer verwendet, wobei meist Kombinationen dieser Komponenten eingesetzt werden. Als Geschmackverbesserer werden meist Gewürzmischungen auf Salz- und Glutamatbasis verwendet, die in erster Linie den spezifischen Eigengeschmack der zu verfeinernden Speisen intensivieren sollen. Es sind auch sog. "Saucenbinder" bekannt. Hierbei handelt es sich in erster Linie um sofort lösliche Mischungen aus modifizierten Stärken- und Stärkederivaten, die lediglich die Viskosität (Textur) der heissen Suppe, Sauce und dergl. erhöhen sollen.

Für eine Verfeinerung des Genusswertes der Speisen wird im allgemeinen die Zugabe von Ei, Butter u.a. Milchbestandteilen, besonders Sahne, und Geschmackverbesserern gewünscht, wodurch Geschmack, Farbe und Textur verbessert werden. Eine zusätzliche Verdickungswirkung kann dann durch den Zusatz von Dickungsmitteln und deren Kombinationen erzielt werden.

Im Kleinhaushalt werden im Regelfall nur geringe Mengen dieser Einzelbestandteile pro Anwendung benötigt. Es besteht daher ein Interesse, eine bereits universell verwendbare Mischung, besonders auf Eigelbbasis, in haltbarer und leicht dosierbarer Form im Haushalt stets zur Verfügung zu haben, die in die fertige, heisse Suppe, Sauce oder einen Gemüsefond direkt zwecks Verfeinerung eingerührt werden kann. Allerdings ist hierbei zu berücksichtigen, dass Eigelb und besonders Vollei beim Einrühren in heisse Flüssigkeiten zu Ausflockung und Gerinnung neigt, und dass bekanntlich Ei und Milchbestandteile (Rahm, Milch, Crème fraîche, etc.) nach Anbruch der Verpackung auch im Kühlschrank nur sehr begrenzt haltbar sind. Durch Zusatz grösserer Zucker- oder Salzmengen lässt sich eine Verbesserung der Haltbarkeit erreichen, wodurch aber der Geschmack zu stark beeinflusst wird. Spezielle Sterilisierungsbehandlungen verbieten sich meist, da hierdurch die Produkte sowohl in der Konsistenz als auch im Geschmack verändert werden. Daher enthalten die Zubereitungen auf Basis von Ei- und Milchprodukten meist Zusätze von Konservierungsmitteln, um mikrobiologisch bedingte Zersetzungen zu verhindern. Jedoch sind aus verschiedenen Gründen diese Zusätze unerwünscht. Eine Ei-Milch-Zuckermischung ist in der US—PS 2 920 966 beschrieben, die pasteurisiert und chemisch konserviert ist und die US—PS 2 848 334 beschreibt ein Produkt zur kühlen Lagerung mit begrenzter Haltbarkeit, welches jedoch auch pasteurisiert werden muss.

Die der Erfindung zugrundliegende Aufgabe besteht darin, eine Zubereitung als Saucenverbesserer zur Verfügung zu stellen, die stabil, bequem aus einer Tube dosierbar und in Flüssigkeit leicht zu suspendieren ist und die ohne Konservierungsmittel-Zusatz und ohne zusätzliche Hitzebehandlung bei Raumtemperatur 6—8 Monate haltbar ist. Die gebrauchfertige Zubereitung soll auch im kalten Zustand, d.h. nach Entnahme der Tube aus dem Eisschrank, aus der Tube ausdrückbar sein und direkt in die heisee Suppe, Sauce und dergleichen eingerührt werden können, um dort die gewünschte Verbesserung hinsichtlich Konsistenz, Geschmack und Aussehen zu bewirken.

Es wurde nun überraschenderweise erkannt, dass eine Zubereitung auf Basis von Sahne, Eigelb oder deren Derivaten, flüssiger Butterfettfraktion, Milchderivaten und Geschmackverstärkern oder -verbesserern, die gestellte Aufgabe zu lösen vermag, wenn sie einen pH-Wert von 5,6—5,8 besitzt, der Wert der Wasseraktivität ($a_w$-Wert) gemessen bei 25°C auf 0,84—0,9 eingestellt ist und sie ein durch Phospholipase A 2 modifiziertes Eigelb enthält. Durch Zusatz von Stärke oder Stärkederivaten kann eine Verdickung erreicht werden.

Hinsichtlich Dosierbarkeit und Sicherstellung bakteriologischer Stabilität ist die Tubenpackung bei derartigen Zubereitungen optimal. Es hat sich gezeigt, dass auch bei mikrobiologisch stabilen Produkten auf Ei- oder Milchbasis (z.B. gezuckerte Kondensmilch) nach Anbruch und trotz Kühllagerung, insbesondere durch Kondensationserscheinungen im Produktfreiem Kopfraum der anderen Packungstypen, z.B. beim Schraubglas, ein Schimmel- oder Hefewachstum nicht auszuschliessen ist. Die erfindungsgemässe Zubereitung soll daher in Tuben abgefüllt zur Verfügung gestellt werden, wodurch ihre Stabilität auch nach dem die Verpackung angebrochen wurde, sichergestellt wird.

Als Eikomponente wird handelsübliches, gesalzenes und pasteurisiertes Eigelb verwendet. Um die eingangs erwähnte Tendenz zur Gerinnung beim Einrühren in heissen Speisen zu umgehen, werden die Phospholipide des Eigelbs durch enzymatische Hydrolyse entsprechend modifiziert. Durch Abspaltung von Fettsäureresten entstehen hierbei wasserlösliche Lysophosphatide. Das Eigelb kann enzymatisch vorbehandelt sein oder man setzt zu Beginn des Mischprozesses die Phospholipase A 2 zu in einer Menge von ca. 1000—1500 I.U./kg Eigelb. Als Präparat eignet sich u.a. das Handelsprodukt "Lecitase" der Firma Novo-Industri, Bagsvaerd, Dänemark. Durch den Enzymzusatz werden in situ, d.h. in der Mischung der Komponenten, die Phospholipide besonders des Eigelbs und die der Milchkomponenten in die entsprechenden Lyso-Phosphatide umgewandelt. Die Reaktion ist nach ca. 2 Wochen bei Raumtemperatur abgeschlossen und sichtet die Stabilität der Zubereitung gegen ein Gerinnen beim Einrühren in die heissen Speisen.

Als Milchkomponente eignet sich in erster Linie UHT-stabilisierter Süssrahm, Sauerrahm oder Crème fraîche mit dem handelsüblichen Fettgehalt (>30%). Zur Erhöhung der Milchtrockensubstanz kann Magermilchpulver oder ein anderes getrocknetes Milchderivat zugesetzt werden.

Als Fettkomponente wird eine flüssige Butterfettfraktion allein oder im Gemisch mit niedrig schmelzenden Pflanzenfetten, z.B. Palmöl oder anderen Pflanzenölen, eingesetzt. Die Verwendung von handelsüblicher Butter oder feste Butterfettfraktionen eignen sich deshalb nicht für die erfindungsgemässe Zubereitung, weil sie zur Auskristallisation in der Fertigmischung führen, was die Abgabe oder Dosierbarkeit aus kühl gelagerten Tuben verhindert oder erschwert. Statt handelsüblicher Butter wird daher eine Butterfettfraktion mit niedrigem Schmelzpunk von vorzugsweise <13°C verwendet.

Zur Geschmacksabrundung und zur Erniedrigung der Wasseraktivität kann bei der erfindungsgemässen Zubereitung anstelle von Kochsalz oder eines Teils des Kochsalzes Natriumglutamat zugesetzt werden. Dieser Natriumglutamatzusatz verbessert nicht nur den Geschmack, sondern besitzt den Vorteil, dass damit wirksam die für die Stabilität erforderliche Wasseraktivität eingestellt werden kann.

Je nach dem, ob nur eine legierende und geschmackverfeinernde Wirkung oder ein zusätzlich dickende Wirkung erzielt werden soll, können mit oder ohne Dickungsmittel die Komponenten vermischt werden. Als Dickungsmittel eignen sich Stärkederivate mit niedriger Verkleisterungstemperatur, insbesondere leicht vernetzte Kartoffelstärken. Native Stärken sind wegen der Tendenz zu "Hautbildung" nach Zubereitung der Saucen etc. weniger geeignet. Aus Rezepturgründen (ausreichender Ei-, Milch-, Fettanteil) ist die Höhe des Stärkeanteils jedoch begrenzt.

Eine zusätzliche Dickungswirkung kann daher durch relativ kleine Anteil von K-Carraghenat (z.B. Genulacta P100, KØBENHAVNS PEKTINFABRIK, Dänemark) erzielt werden. Kappa-Carraghenat bildet in der Wärme mit der Milchproteinfraktion eine Gelstruktur und somit eine zusätzliche Viskositätserhöhung. Die wasserhaltigen Ausgangskomponenten, wie Sahne und gesalzenes Eigelb, sollen sterilisiert oder vorpasteurisiert sein und somit frei von pathogenen Keimen und Verderbniserregern (Schimmel, Hefen und Lactobazillen).

Um die bakteriologische Haltbarkeit des Fertigproduktes ohne weitere Hitzbehandlung oder Zusatz bakteriostatischer Mittel sicherzustellen, ist die Wasseraktivität ($a_w$-Wert) auf einen Wert <0,9 einzustellen, vorzugsweise auf $a_w$- = 0,86—0,88. Dieser $a_w$-Wert (= Gleichgewichsfeuchtigkeit über dem Produkt in % Luftfeuchtigkeit) ist eine Grösse, die für die Haltbarkeit der Zubereitung mit entscheidend ist. Bei Werten unter 0,84 besteht die Gefahr von Dehydratisierungsreaktionen bei der Lagerung mit Veränderung der Farbe, d.h. Braunwerden der Zubereitung auch bei Luftabschluss in der Tube, denn bei $a_w$-Werten <0,84 steigt besonders bei erhöhter Lagertemperatur die Tendenz zu Maillard-Reaktionen (Bildung brauner Farbpigmente) aus Reaktionsprodukten von Aminosäuren und reduzierenden Zuckern. Beide Reaktionspartner, besonders Glutaminsäure und Lactose, sind in hohen Konzentrationen im erfindungsgemässen Produkt vorhanden. Eine zusätzliche Verzögerung unerwünschter brauner Reaktionsprodukte wird auch durch die Absenkung des ursprünglichen pH-Wertes von ca. 6,20 auf Werte unter 5,80 erreicht. Hierfür sind nur relativ geringe, sensorisch nicht störende Mengen von Milch- oder Zitronensäure ausreichend. Vorzugsweise soll nach Vermischung aller komponenten der pH-Wert 5,7 betragen. Die Zubereitung ist auch bei Lagertemperaturen >30°C mikrobiologisch ausreichend stabil. In der Regel konnte sogar bei dem erfindungsgemässen Saucenverbesserer eine Reduktion eventuell vorhandener Anfangskeimzahlen um 1—2 Zehnerpotenzen nach 4-wöchentlicher Bebrütung beobachtet werden. Geringe geschmackliche Alterungserscheinungen werden bei Lagerung um 20°C frühestens nach 6—8 Monaten beobachtet, jedoch keinerlei Verderbsreaktionen, wie "Käsigwerden", Fettoxydation und dergl. Bei im Eisschrank gelagertem Saucenverbesserer sind Aenderungen auch nach mehr als einem Jahr nicht feststellbar. Bei Anwendung in der Praxis werden zu ca. 1/2 l. fertige, gekochte Suppe, Sauce oder Gemüsefond, nachdem diese vom Feuer genommen wurden, 20—25 g des Saucenverbesserers, d.h. ca. 1 Esslöffel oder nach Bedarf mehr oder weniger, mit Schneebesen intensiv eingerührt, worauf die Speise zum Verzehr bereit ist. Bei der stärkehaltigen Komponente ist einmaliges Aufkochen vorteilhaft, um maximale Endviskosität zu erreichen.

Zur Herstellung des Saucenverbesserers werden, z.B. in einer STEPHAN-Prozessmaschine, die flüssigen Komponenten, nämlich Sahne und Eigelb, kalt vorgemischt, bei Temperaturen von 10—20°C, worauf die erforderliche Menge an Lecitase, in der ca. 100-Fachen Wassermenge aufgenommen, zugemischt wird. Es ist auch möglich, die Lecitase vorher ins Eigelb einzumischen und diese ca. 1 Woche im Kühlraum bei ca. +5°C zwischenzulagern. Die Enzymreaktion läuft in dieser Zeit quantitativ ab. Diese Vorbehandlung sichert ebenfalls das Verbindern der Gerinnung beim Erhitzen.

Der Mischer wird dann mittels Vakuumpumpe evakuiert und in das bei hoher Umdrehung laufende Mischwerk anschliessend der Fettanteil (flüssiges Butteröl, eventuell Zusatz von Pflanzenöl) eingesaugt. Anschliessend werden die vorgemischten Trockenstoffe, wie Milchpulver, Glutamat, Aromen, evtl. Dickungsmittel, eingetragen und unter Vakuum fertiggemischt. Endtemperatur soll ca. 25—30°C betragen. Die fertige Masse hat eine glatte, geschmeidige, margarineartige Konsistenz und ist gut über Kolbendosierer in die Tuben abfüllbar. Bei der Abfüllung sind Lufteinschlüsse in der Tube soweit als möglich zur vermeiden. Eine besondere Sterilisierungsmassnahme ist nicht erforderlich.

# EP 0 166 284 B1

<div align="center">Beispiel 1</div>

Rezeptur zum Verfeinern und Legieren von Saucen

| | Gew.-% |
|---|---|
| Eigelb (10% Salz, Wassergehalt: 54%) | 36,00 |
| Sahne (>38% Fett) | 24,24 |
| Enzymlösung (350 mg "Lecitase" in 10,0 ml) | 0,01 |
| Glutamat | 7,00 |
| Salz | 1,50 |
| Magermilchpulver (Wassergehalt 4,3%) | 17,00 |
| Butterfett fraktioniert (Schmelzpunkt <12°C) + Pflanzenöl | 14,00 |
| Aromen | 0,05 |
| Milchsäure (90%ig) | 0,20 |
| | 100,00 |

Die erhaltene Mischung hatte eine Wasseraktivität von 0,86 und einen pH-Wert von 5,70. Als Richtdosierung sind 20 g in 1/2 l. Sauce zu verwenden.

<div align="center">Beispiel 2</div>

Rezeptur mit verdickender Wirkung

| | Gew.-% |
|---|---|
| Eigelb (10% Salz, Wassergehalt: 54%) mit Enzym vorbehandelt) | 13,00 |
| Sahne (>38% Fett) | 20,00 |
| Genulacta P100 (Kappa-Carraghenat) | 1,00 |
| Glutamat | 5,00 |
| Salz | 2,30 |
| Butterfett fraktioniert (Schmelzpunkt <12°C) | 10,50 |
| Pflanzenöl | 10,00 |
| Modifizierte Kartoffelstärke | 38,00 |
| Aroma | 0,05 |
| Milchsäure (90%ig) | 0,15 |
| | 100,00 |

Als Richtdosierung werden 20—30 g in 1/2 l. Flüssigkeit empfohlen.

**Patentansprüche für die Vertragsstaaten: BE CH DE FR GB IT LI NL SE**

1. Ohne Konservierungsmittel und Sterilisierung haltbarer, in Tuben abgefüllter Saucenverbesserer auf Basis von Sahne, Eigelb, flüssiger Butterfettfraktion, Milchderivaten sowie Geschmacksverstärkern, dadurch gekennzeichnet, dass die Zubereitung einen pH-Wert von 5,6—5,8 besitzt und der Wert der

Wasseraktivät ($a_w$-Wert) gemessen bei 25°C auf 0,84—0,9 eingestellt ist und dass sie ein durch Phospholipase A 2 modifiziertes Eigelb enthält.

2. Saucenverbesserer nach Anspruch 1, dadurch gekennzeichnet, dass der pH-Wert auf 5,7 und der $a_w$-Wert auf 0,86—0,88 eingestellt sind.

3. Saucenverbesserer nach Anspruch 1, dadurch gekennzeichnet, dass die Phospholipide des Eigelbs sowie der Sahne und Milchderivate in Gegenwart der anderen Komponenten der Zubereitung durch einen Zusatz von Phospholipase A 2 modifiziert werden sind.

4. Saucenverbesserer nach Anspruch 1—3, dadurch gekennzeichnet, dass er als verdickenden Zusatz modifizierte Kartoffelstärke und/oder K-Carraghenat enthält.

**Patentansprüche für den Vertragsstaat: AT**

1. Verfahren zur Herstellung eines ohne Konservierungsmittel und Sterilisierung haltbaren, in Tuben abgefüllten Saucenverbesserers auf Basis von Sahne, Eigelb, flüssiger Butterfettfraktion, Milchderivaten sowie Geschmackverstärkern, dadurch gekennzeichnet, dass der pH-Wert auf 5,6—5,8 und der Wert der Wasseraktivät ($a_w$-Wert) gemessen bei 25°C auf 0,84—0,9 eingestellt sind und dass man ein durch Phospholipase A 2 modifiziertes Eigelb zufügt.

2. Verfahren nach Anspruch 1, dadurch gekennzeichnet, dass der pH-Wert auf 5,7 und der $a_w$-Wert auf 0,86—0,88 eingestellt sind.

3. Verfahren nach Anspruch 1, dadurch gekennzeichnet, dass die Phospholipide des Eigelbs sowie der Sahne und Milchderivate in Gegenwart der anderen Komponenten der Zubereitung durch einen Zusatz von Phospholipase A 2 modifiziert worden sind.

4. Verfahren nach Anspruch 1—3, dadurch gekennzeichnet, dass man als verdickenden Zusatz modifizierte Kartoffelstärke und/oder K-Carraghenat zufügt.

**Revendications pour les états contractants: BE CH DE FR GB IT LI NL SE**

1. Améliorateur de sauce conditionné en tube, susceptible d'être conservé sans agent conservateur et sans stérilisation, à base de crème, jaune d'oeuf, fraction de graisse de beurre liquide, dérivés du lait ainsi que renforçateurs de goût, caractérisé en ce que la composition a un pH de 5,6—5,8 et que la valeur de l'activité de l'eau ($a_w$) mesurée à 25°C est réglée à 0,84—0,90 et qu'elle contient un jaune d'oeuf modifié avec la phospholipase A 2.

2. Améliorateur de sauce selon la revendication 1, caractérisé en ce que le pH est réglé à 5,7 et $a_w$ à 0,86—0,88.

3. Améliorateur de sauce selon la revendication 1, caractérisé en ce que les phospholipides du jaune d'oeuf ainsi que ceux de la crème et des dérivés du lait en présence des autres constituants de la composition sont modifiés par une addition de phospholipase A 2.

4. Améliorateur de sauce selon les revendications 1 à 3, caractérisé en ce qu'il contient comme additif épaississeur de l'amidon de pomme de terre modifié et/ou du K-Carraghenate.

**Revendications pour l'état contractant: AT**

1. Procédé pour la fabrication d'un améliorateur de sauce conditionné en tube, susceptible d'être conservé sans agent conservateur et sans stérilisation, à base de crème, jaune d'oeuf, fraction de graisse de beurre liquide, dérivés du lait ainsi que renforçateurs de goût, caractérisé en ce qu'on régle le pH à 5,6—5,8 et la valeur de l'activité de l'eau ($a_w$) mesurée à 25°C à 0,84—0,90 et qu'on ajoute un jaune d'oeuf modifié avec la phospholipase A 2.

2. Procédé selon la revendication 1, caractérisé en ce que le pH est réglé à 5,7 et $a_w$ à 0,86—0,88.

3. Procédé selon la revendication 1, caractérisé en ce que les phospholipides du jaune d'oeuf ainsi que ceux de la crème et des dérivés du lait en présence des autres constituants de la composition sont modifiés par une addition de phospholipase A 2.

4. Procédé selon les revendications 1 à 3, caractérisé en ce qu'on ajoute comme additif épaississeur de l'amidon de pomme de terre modifié et/ou du K-Carraghenate.

**Claims for the contracting states: BE CH DE FR GB IT LI NL SE**

1. A sauce enhancer based on cream, egg yolk, a liquid butter fat fraction, milk derivatives and flavour intensifiers and packed in tubes, keeping without preservatives or sterilization, characterized in that the preparation has a pH-value of from 5.6 to 5.8 and the water activity value ($a_w$-value) as measured at 25°C is adjusted to 0.84—0.9 and in that it contains an egg yolk modified by phospholipase A 2.

2. A sauce enhancer as claimed in Claim 1, characterized in that the pH-value if adjusted to 5.7 and the $a_w$-value to 0.86—0.88.

3. A sauce enhancer as claimed in Claim 1, characterized in that the phospholipides of the egg yolk and of the cream and milk derivatives have been modified in the presence of the other components of the preparation by an addition of  phospholipase A 2.

4. A sauce enhancer as claimed in Claims 1 to 3, characterized in that it contains modified potato starch and/or K-carragheenate as thickening additive.

**Claims for the contracting state: AT**

1. A process for the preparation of a sauce enhancer based on cream, egg yolk, a liquid butter fat fraction, milk derivatives and flavour intensifiers and packed in tubes, keeping without preservatives or sterilization, characterized in that the pH-value is adjusted from 5.6 to 5.8 and the water activity value $a_w$-value) as measured at 25°C to 0.84—0.9 and in that an egg yolk modified by phospholipase A 2 is added.

2. A process as claimed in Claim 1, characterized in that the pH-value if adjusted to 5.7 and the $a_w$-value to 0.86—0.88.

3. A process as claimed in Claim 1, characterized in that the phospholipides of the egg yolk and of the cream and milk derivatives have been modified in the presence of the other components of the preparation by an addition of phospholipase A 2.

4. A process as claimed in Claims 1 to 3, characterized in that modified potato starch and/or K-carragheenate are added as thickening additive.